# EUROPEAN PATENT SPECIFICATION

(11) **EP 2 637 429 B1**
(45) Date of publication and mention of the grant of the patent: **29.11.2017**
(21) Application number: 12005632.0
(22) Date of filing: 02.08.2012
(51) Int. Cl.: H04W 8/26, H04W 4/16, H04W 76/02

(54) **Call establishment to an active SIM card identifier in a mobile communications network**
Rufaufbau zu einer aktiven SIM-Karte Identifizierer in einem Mobilfunknetz
Établissement d'appel à un identifiant active de la carte SIM dans un réseau de communication mobile

(30) Priority: 06.03.2012 EP 12158333
(43) Date of publication of application: 11.09.2013
(73) Proprietor: Telefónica Germany GmbH & Co. OHG, 80992 München (DE)
(72) Inventor: VILAR, Sonia, 80801 München (DE); WOOLLEY, Mark, 80993 München (DE); STAMM, Patricia, 80687 München (DE); GOLDMANN, Maik, 80333 München (DE); SCHOOB, Dirk, 80637 München (DE)
(74) Representative: Herrmann, Uwe

(56) References cited:
- WO-A1-92/19078
- WO-A1-99/62282
- WO-A2-2005/017693
- US-A1- 2004 229 601
- US-A1- 2007 197 213
- US-A1- 2007 213 050
- US-A1- 2008 064 443
- US-A1- 2010 081 460

## Description

The present invention relates to a communication system for providing mobile communication between a network and a mobile terminal, such as a mobile phone.

In the communication system of the present invention, the mobile terminal is equipped with one or more SIM-cards, the one or more SIM-cards having at least a first and a second identifier, i.e. at least a first and a second IMSI and/or MSISDN. This service is also known as a dual line service, which enables the subscriber to have two telephone numbers assigned to a single mobile terminal, and preferably assigned to a single SIM card. Usually, these two lines are called business line and consumer line, and are independently billed.

Because the mobile terminal can only be connected to the network under one of the identifiers, the dual line subscriber can modify the active subscription via swapping the identifier used for the mobile terminal. Therefore, only one of the identifiers is active at a certain time.

This also means that incoming calls can only be established with the active identifier. However, the network has a connecting function that will root incoming connections for the inactive line to the active line. Therefore, if the subscriber is for example using his mobile phone under the first identifier, he will still receive calls directed to the second identifier, and vice versa.

However, a problem may arise if the subscriber does not pick up the phone, or cannot be reached, or if the phone is busy.

In prior art systems with only one identifier for one SIM.card, the caller will be forwarded to the call forward destination assigned to this identifier, i. e. usually the voice mail function.

However, in case of a system with two identifiers, this means that the subscriber can not use different voice mail functions for his private and his business line, because otherwise callers to the business line will be forwarded to the private voice mail function of the subscriber if the private line is active, and vice versa. Document WO 2005/017693 A2 discloses a so called MIMM/MISM service for a mobile communication system. Such service provides a solution for individual mobile communication subscribers using one or more of a single cell phone, car phone or a smart phone. In particular, the service enables subscribers business email users to read emails on one handset while simultaneously sending and receiving calls and SMS on another handset. Document US 2010/0081460 A1 discloses a device and method related to a multi number cellular communication system enabling a single mobile device to use more than one telephone number. For each individual telephone number the user may choose his or her preferences for this telephone number. Document US 2007/0213050 A1 (D3) D3 is directed to a system providing for facilitating mobile communication corresponding to multiple MSIDSDNs associated with multiple IMSI of a subscriber. The principal intention of this document is to equip a single subscriber with a plurality of different MSIDSDNs which are active in parallel. Document US 2008/0064443 A1 provides a method for setting a service in a mobile communication terminal including at least first and second user identity cards. The method automatically performs the necessary configuration steps for forwarding an incoming call to an inactive SIM-card to the second active SIM-card of the mobile device. Document WO 92/19078 addresses a subscriber identity module allocated to at least two different identifiers which can be selectively activated by the user. An incoming call can only be established to the identity allocated to the dialled number if said identity is active. If the desired identity is inactive the call is transferred to the subscriber's next identity. Document US 2004/0229601 A1 discloses an incoming call processed and forwarded until a suitable mobile station is determined to be available for the purpose of receiving a call.A plurality of different mobile devices allocated to a single call number wherein the subscriber can set the order in which the devices should be connected to an incoming call. The present invention is therefore directed to providing an improved communication system with two identifiers that will provide a better voice mail function to the subscriber.

This object is solved by a communication system, a method and a computer program according to the independent claims. The present invention comprises a communication system for providing mobile communication between a network and a mobile terminal, wherein the mobile terminal is equipped with one or more SIM-cards, and the one or more SIM-cards having at least a first and a second identifier. Further, the mobile terminal and/or the network has an activation function for choosing one of the identifiers as an active identifier, and a connecting function for establishing calls to the identifier that is active. The connecting function is implemented in such a way that, if a call to the first identifier is requested while the second identifier is active, a call to the second identifier is established. Further, a first call forward destination is assigned to the first identifier and a second, separate call forward destination is assigned to the second identifier. According to the present invention, if a call to the first identifier is requested while the second identifier is active, such that a call to the second identifier is established, but the second identifier is not answering and/or busy and/or not reachable, a communication with the call forward destination of the first identifier is established by a coordination function of the network. This means that a caller will always be connected to the call forward destination of the identifier he is calling, regardless of the question which identifier is active. Therefore, according to the present invention, if for example the business line of a subscriber is called and the private line is active, such that the call is connected to the private line, in the case that the call is not answered, the call is rooted by the coordination function of the network to the call forward destination of the business line, for example the voice mail of the inactive business line.

In a preferred embodiment of the present invention, the mobile terminal may be equipped with at least one SIM-Card to which the first and the second identifier are assigned. In this case, therefore, different identifiers are assigned to a single SIM-Card. However, the system of the present invention can also be implemented if the mobile terminal is equipped with at least a first and a second SIM-Card, wherein the first identifier is assigned to the first SIM-Card and the second identifiers is assigned to the second SIM-Card.

According to the present invention, the network and/or the mobile terminal may have a call forwarding function for forwarding calls to an identifier on a second line back to the network if the identifier is not answering and/or busy and/or not reachable.

For example, if someone is calling the first identifier and the first identifier is active, such that the call is put through to the first identifier, but the first identifier is busy, the forwarding function will forward the call back to the network and then establish a connection to the call forwarding function of the first identifier, for example the voice mail function of the first identifier. The same is true for calls directed to an active second identifier.

According to an embodiment of the present invention, this call forwarding function can be used for dealing with all calls put through to the first or the second identifier, regardless whether these calls were originally requested for this identifier or not. The call forwarding function will therefore first connect the forwarded call to the coordination function of the present invention such that in the end, the call is put through to the correct call forward destination.

Further, according to an embodiment of the present invention, if a call to the first identifier is requested while the second identifier is active, such that a call to the second identifier is established, but the second identifier is not answering and/or busy and/or not reachable, the call will first be forwarded back to the network from the second identifier. i. e. by establishing a back connection from the second identifier.

According to an embodiment of the present invention, the coordination function of the network will preferably correlate the call to the second identifier and the forwarded call from the second identifier, and establish a communication with the call forward destination of the first identifier. Thereby, the call that is forwarded form the second identifier is not connected to the call forward destination of the second identifier, but is identified and the coordination function will establish the correct communication.

In particular, the coordination function of the network can create call context if a call to the first identifier is requested while the second identifier is active and a call to the second identifier is established. Preferably, the coordination function uses this call context to correlate the call to the second identifier and a forwarded call from the second identifier.

Further, according to the present invention, the coordination function preferably will release the call to the second identifier and directly establish a communication with the call forward destination of the first identifier. Therefore, if the coordination function has correlated the call to the second identifier and the forwarded call from the second identifier, the call to the call forward destination of the first identifier is not rooted to the mobile terminal and back to the network, but the communication with the terminal is released and a direct connection between the caller and the forward call destination of the first identifier is established.

The present invention can in particular be implemented in communication systems where the network has a roaming function for establishing communication to a mobile terminal connected to a different network. Such a roaming function will allow a subscriber to use his mobile phone also if he is not in the area covered by the network of his own operator, but for example abroad and connected to the network of another operator.

Such communication systems having a roaming function are usually equipped with a roaming trombone elimination function, that will establish a direct communication to a call forward destination of a mobile terminal if the roaming mobile terminal is not answering and/or busy and/or not reachable.

Without such a roaming trombone elimination function, a call to the call forward destination of a roaming subscriber will first trombone out to the visited network and then back to the home network to get to the call forward destination. Tromboning occurs because, when a call is placed to a roamer who is abroad, a first international leg is set up to reach the mobile terminal, and when the call is not answered, a second international leg is set up back to the call forward destination, such as the voice mail box. The roaming trombone elimination function will eliminate these international legs from the home network to the visited network and back, and provide a direct internal communication between the caller and the call forward destination.

In particular, such a roaming trombone elimination function can be implemented by correlating the call to the roaming mobile terminal and the forwarded call from the roaming mobile terminal, in order to identify and eliminate the trombone.

In particular, such a roaming trombone elimination function can be implemented on an intelligent network platform of the network, in particular on a next generation Intelligent Network (ngIN) platform. Such a platform can run a variety of other services, such as applications for dialled number correction, messaging, pre-paid, VPN and virtual PBX. Such an nglN-system can use a variety of interfaces to connect to external systems.

In the case of the roaming trombone elimination function, a set of protocols can be used to connect to the home network and the visited network switches. Such a standard functionality can allow a network system to be deployed quickly and easily once the protocols with the roaming networks have been agreed.

The roaming trombone elimination function can in particular create call context for a call to a roaming mobile terminal, in order to correlate the forwarded call from the roaming mobile terminal to the outgoing call.

In particular, the call context can contain the roaming location of the mobile terminal, which is then compared to the roaming location of incoming calls from the mobile terminal.

According to the present invention, the coordination function may use the roaming trombone elimination function for establishing communication with the call forward destination of the first identifier. Therefore, an existing functionality of the network can be used in order to provide the improved call forwarding functionality for dual line services of the present invention.

Preferably, the coordination function of the present invention may use the roaming trombone elimination function also in cases where the mobile terminal is not roaming, i. e. if the second identifier is connected to the home network.

In an embodiment of the present invention, the coordination function may use the roaming trombone elimination function for correlating the call to the second identifier and the forwarded call from the second identifier.

Further, the roaming trombone elimination function may use call context created by the coordination function of the network to correlate the call to the second identifier and a forwarded call from the second identifier.

Preferably, the call context created by the coordination function contains a virtual roaming location if the mobile terminal of the second identifier is not roaming, such that the call context can also be processed by a trombone elimination function of the network if the subscriber is not roaming. Thereby, the roaming trombone elimination function of the network can be used to also process the call context created by the coordination function.

If the mobile terminal is roaming, on the other hand, the call context preferably contains the real roaming location, which can be processed by the roaming trombone elimination function of the network, anyway. Therefore, the coordination function according to the present invention can be used regardless whether the mobile terminal is roaming or is connected to the home network.

Preferably, according to the present invention, the call context may also comprise information regarding the identifier for which a connection was initially requested.

Further, the roaming trombone elimination function may be used to directly establish a communication with the call forward destination of the first identifier. In particular, the roaming trombone elimination function may release the call to the second identifier and establish a direct connection to the call forward destination of the first identifier.

According to an embodiment of the present invention, the same coordination function can also be used if a communication with the first identifier is requested and the first identifier is active.

However, according to a different embodiment of the present invention, if a communication with the first identifier is requested and the first identifier is active, the call to the first identifier is established. If in this case the first identifier is not answering and/or busy and/or not reachable, a communication with the call forward destination of the first identifier is established without using the coordination function of the network if the mobile terminal is not roaming. Therefore, if the mobile terminal is not roaming and the identifier that is requested is active and connected, the coordination function of the network is not used for forwarding the call, because the call will reach the correct call forwarding destination with the standard call forward function. In particular, this means that the call to the first identifier does not have to be released, but can be forwarded to the call forward destination.

However, if the mobile terminal is roaming, the communication with the call forward destination of the first identifier is preferably established using the roaming trombone elimination function of the network. Therefore, if the mobile terminal is roaming and the call is directed to the identifier initially requested, the usual roaming trombone elimination function can be used. In particular, this means releasing the call to the first identifier and establishing a direct connection to the call forward destination of the first identifier.

According to an embodiment of the present invention, the first identifier and the second identifier can be two separate IMSI and/or MSISDN assigned to a single SIM card or to two separate SIMs. Thereby, the subscriber can be reached under two different telephone numbers and can use his mobile phone to call out with these two different lines.

The dual line subscriber can modify the active subscription by swapping the IMSI used for the mobile terminal. Through the use of such a dual line service, only one of the IMSI/MSISDN is active at a certain time. Preferably, the two different identifiers are independently billed. Usually, the two lines are used as a business line and as a private consumer line. Further, according to the present invention, the incoming communications directed initially to the inactive line are rooted by the network to the active line.

The communication system of the present invention can also have, in addition to the dual line service, a multi-card function for assigning the same identifier to a group of SIM-cards. Such a multi-card service enables a single subscriber to use a telephone number across different devices by using different SIM-cards in each device. Preferably, such a multi-card service provides a single mobile number and a single account for more than one SIM-card.

Preferably, dummy identifiers are assigned internally to all the identifiers of all the SIM-cards. Thereby, internally, each identifier of each SIM-card is characterized by his dummy identifier. However, several dummy identifiers can be grouped by a multi-card function and assigned to the same telephone number, or can be grouped by a dual-line function and assigned to one or more SIM-cards.

If the multi-card and dual line services of the present invention are combined, each line of a dual line subscriber is preferably considered as an independent group member for multi-card subscription, and can therefore be grouped together with other single or dual line identifiers on a different SIM-Card.

Preferably, the network of the telecommunication system of the present invention has a database function containing information on the dummy identifiers and the identifiers and/or the SIM-cards they are assigned to.

Further, the coordination function of the network preferably communicates with the database function when a call to an identifier is requested, in order to establish all dummy identifiers assigned to this identifier or assigned to a SIM-card the identifier is assigned to. Thereby, the coordination function will be provided with all possible dummy identifiers to which the call might be connected.

Preferably, the network comprises functions for establishing which of these dummy identifiers is active. For this purpose, the coordination function or the database function preferably communicates with the home location register of the network.

Further, the network may comprise a function for selecting a dummy identifier if several identifiers are active, for example by a priority function.

According to the present invention, the coordination function may only create call context if a call to a dummy identifier is established that does not belong to the multicard group of dummy identifiers assigned to the identifier for which a call was requested. If the call is directed to a dummy identifier belonging to the multicard group of dummy identifiers assigned to the identifier for which a call was initially requested, no coordination is necessary, because the call will anyway be forwarded to the correct call forward destination.

In a communication system according the present invention, where multi-card functionality is combined with several identifiers, the mobile terminal of the present invention may also be equipped with at least a second SIM-card and/or the first and/or the second identifier may also be assigned to a second SIM-card provided in a different mobile terminal.

In a further embodiment of the present invention, the first and the second call forward destinations may comprise a first and a second voice mail function for separately recording voice mails for the first and second identifier, respectively.

The present invention further comprises a method for providing mobile communication between a network and mobile terminal, the mobile terminal being equipped with one or more SIM-cards, the one or more SIM-cards having at least a first and a second identifier. In the method of the present invention, one out of the identifiers is chosen as an active identifier, and a first call forward destination is assigned to the first identifier and a second, separate call forward destination is assigned to the second identifier. Further, if a call to the first identifier is requested while the second identifier is active, the call to the second identifier is established, and if the second identifier is not answering and/or busy and/or not reachable, a communication with the call forward destination of the first identifier is established. Thereby, the method of the present invention provides the same advantages as the communication system according to the present invention described above.

Preferably, the method of the present invention comprises the steps described above with respect to the functionalities of the communication system. Further, the method of the present invention may use a system of the present invention as described above.

Further, the present invention comprises a computer program for implementing a method as described above in a network. The computer program may in particular comprise a code for implementing the method steps and the functions of the system described above.

Preferably, the computer program may be contained on a computer-readable storage medium, and may be of such a form that if implemented on a network, it will provide a system according to the present invention. Of course, the computer program may comprise different computer program parts that are implemented separately on different components of the system.

An embodiment of the present invention will now be described with reference to the following figures:
- Figure 1a-1c:: A process flow diagram illustrating an embodiment of the present invention where the business number is called and a private number is active, and the call is forwarded to the voice mail of the business number,
- Figure 2a-2c:: A process flow diagram showing an embodiment of the present invention where the business number is called, while the business number is active but roaming, and the call is forwarded to the voice mail of the business number according to the present invention,
- Figure 3a-3c:: A process flow diagram showing an embodiment of the present invention where a business number is called and the private number is active, but where the call is not forwarded because the private number answers and then hangs up, or the private number belongs to a subscriber that has no forward call destination.

Normally, when a network diverts a call to a roaming subscriber, voice circuits will trombone out to the visited network and back to the home network to get it to the voice mail system. Tromboning occurs because, when a call is placed to a roamer who is abroad, an international leg is first set up to reach the handset, and when this is not answered a second international leg is set up back to the voice mail box. Hence two costs are incurred, which forces either the subscriber or the operator to pay international tariffs for voice mail or alternative forwarding.

Therefore, mobile telephone systems are now equipped with a roaming trombone elimination function. This function is called in the present embodiment Elimination Voice Mail Trombone (EVMT) service. In the embodiment, the EVMT service runs on a next generation Intelligent Network (ngIN) platform. This platforms runs a variety of other services on a single platform, such as applications for dialled number correction, messaging, prepay, VPN and virtual PBX. The ngIN system uses a variety of interfaces to connect to external systems.

In the case of EVMT, a set of protocols called CAMEL are used to connect to the home network and the visited network switches. The use of the standard functionality allows the system to be developed quickly and easily once CAMEL connectivity with roaming networks has been agreed.

With the EVMT service, if a customers is roaming abroad but not answering, the international leg that goes from the home network to the hosting network abroad and back again to the home network and the voice mail function located there, are eliminated. Thereby, the call can be kept in the home network and forwarded directly to the call forward destination, for example the voice mail or another specified number. The EVMT service therefore eliminates the trombone effect and the subscriber is charged as if he was in the home network.

The system of the present invention is further equipped with a dual line service, which enables the subscriber to have two IMSI and MSISDN assigned to only one SIM-card or only one mobile terminal. These two lines are usually named business line and consumer line, and have independent billing and/or charging functionality. The dual line subscriber can modify the active subscription via swapping the IMSI used for his mobile terminal. The mobile terminal can in particular be a mobile telephone.

Through the use of the dual line service only one of the IMSI/MSISDN is active at a certain time. However, incoming calls/SMS for the inactive line are rooted to the active line.

As a preferred embodiment, the dual line service may be combined with a multi-card service that enables a single user to use a mobile phone number seamlessly across different devices, by assigning the same telephone number to different SIM-cards in each device. Multi-card provides billing services around the ownership of multiple devices on a single mobile number and a single account.

The dual line service can share the call/USSD/SMS related processes with multi-card, each line of the dual line subscriber being considered as an independent group element for multi-card subscription. Therefore, each line of the dual line subscriber can be grouped together with other single IMSI or dual line IMSI in another device.

According to the present invention, if the first number of a dual line is called while the second number is active, the call is connected to the active second number. In case the call is not answered, or the second line is busy, or the mobile terminal is not reachable, the call is rooted to the call forward destination of the first number that was initially called, for example to the voice mail of the inactive first number. Therefore, the correct call forward destination such as the correct voice mail can always be reached, regardless of whether the number that is called is active or inactive. Thereby, the call forward destinations such as the voice mails of the two numbers can be entirely independent from each other.

Further, when the first line of a dual line service is called and the second line is active, but is not answering, the call can be forwarded directly to the voice mail of the called first line.

Preferably, in the present invention, the EVMT service is used to connect the call to the correct call forward destination. Therefore, the EVMT feature originally developed only for avoiding trombones for roaming subscribers has a significantly expanded usage. In particular, the EVMT service will also be used for dual line users in the home network, in order to root to the correct voice mail.

In an embodiment, this implies that the voice circuit from the gateway MSC to the visiting MSC is removed before the call is diverted to the correct destination. This function that is usually used to avoid trombones to a roaming network is now also used in the home network for dual line subscribers. Of course, the function can also used for dual line users that are roaming.

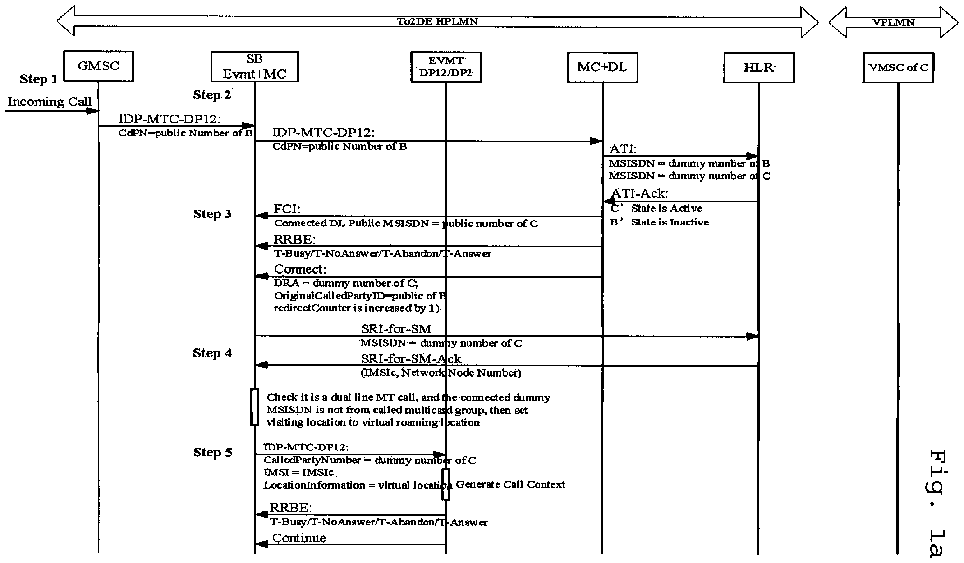

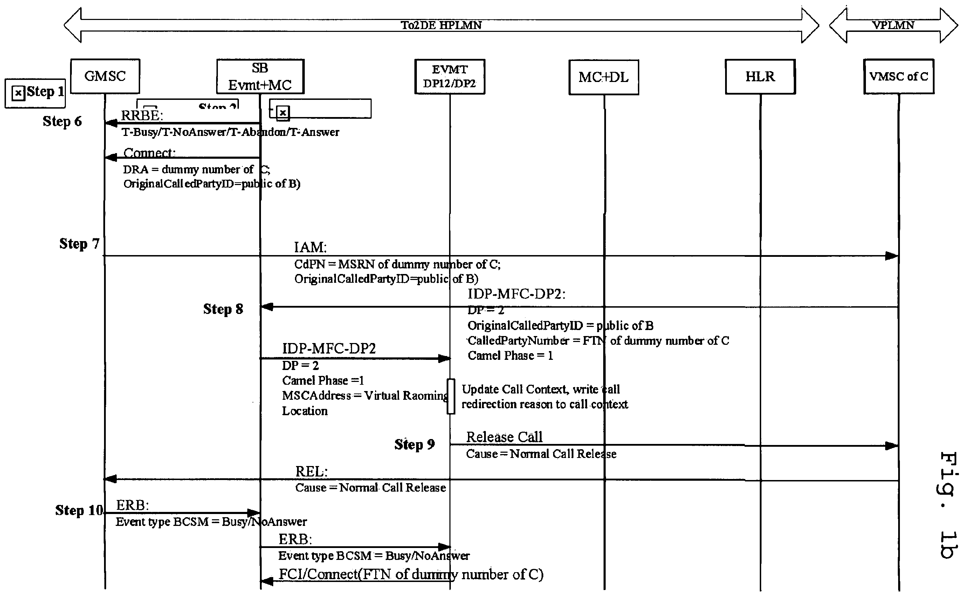

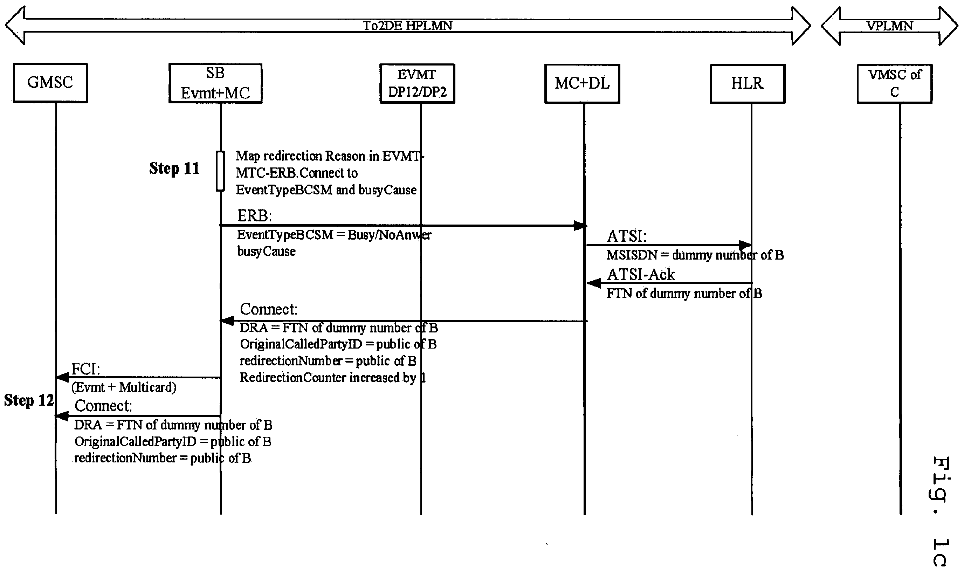

Figure 1a-1c now illustrates the process flow in an embodiment of a system according to the present invention.

According to the embodiment of the present invention, the subscriber of a multi-card dual line (MC+DL) has a first line B and a second line C, of which the second line C is currently active. While in the embodiment the dual line service is therefore combined with a multi-card service, the method and the system of the present invention could also be used for a dual line service not having a multi-card service.

The mobile terminal on which the second line C is active is connected to the VMSC, which can either be part of the home network of the subscriber or part of a roaming network. The same call flow is therefore applicable to the home network as well as the roaming network.

Process flow is explained as follows:

### Step 1:

A mobile terminated call (MTC) reaches the gateway mobile service switching center (gateway MSC). The incoming call is directed to the telephone number associated to the first line B, i. e. the CdPN is the public number of B.

### Step 2:

EVMT service is triggered by the gateway MSC, which will check if the called telephone number matches a dual line subscriber. This is done by a connecting to the dual line service MC+DL.

In particular, the EVMT service may be triggered by the gateway MSC on MTC via initial DP (IDP) message on detection point 12 (DP 12); the EVMT service will check if the cdPN of B in the DP12 IDP matches a multi-card dual line subscriber.

### Step 3:

The system checks which of the lines of the subscriber is active, by connecting to the home location register, and sends connecting information comprising the dummy number of the active line C back to EVMT.

In particular, the dual line service section may check with the home location register via RTI messages which of the lines of the dual line service is active by sending the dummy numbers of all the lines to the HLR.

The dual line section may then send the public number of the active line, BCSM events (RRBE) and a connection message for the dummy number of the active line back to the EVMT service.

### Step 4:

The EVMT service will then retrieve the location of the active line C by connecting to the HLR.

In particular, the EVMT service may send an SRI for SM to retrieve the location of C, and HLR may transmit location information of C back to the EVMT service.

Further, it is checked that the dummy number of the active line C is not from the called multi-card group B.

### Step 5:

In this step, call context is generated, i. e. data relating to the terminating call is saved in the system so that a possible forwarded call can be correlated with this terminated call. In particular, the call context may comprise the location of the active line C, i. e. the virtual or real roaming location. In particular, the location of C can be set to a virtual roaming location if C is in the home network, and if the user is roaming, the real location is used.

Further, the call context may comprise data regarding the initially called number, which in the present case is B.

### Step 6:

A request report BCSM (RRBE) requesting that nglN is informed of the specific call events, and a connection message for connecting the dummy number of the active line C is transmitted from EVMT service to GMSC.

### Step 7:

A call is established from the GMSC to the VMSC based on the dummy number of C.

### Step 8:

When C does not answer, or is busy, or is not reachable, the EVMT service is triggered by the VMSC on a mobile forwarded call (MFC).

The EVMT service correlates this particular forwarded call with the previously processed termination call. This is done by using the call context generated for the previously processed termination call. If the two calls are correlated, the call context is updated, and a call redirection reason is included in the call context.

### Step 9:

If the EVMT service can correlate the forwarded call to the previously processed termination call, it decides that the call must be released and signals this to the VMSC. The VMSC therefore releases the call and sends a release message to the GMSC.

### Step 10:

Once the release message reaches the GMSC, it informs the EVMT service and provides the relevant call state event. At this point the speech circuit to the VMSC is removed.

### Step 11:

EVMT passes the event details to the dual line service, which then requests, for the inactive line B initially called, the relevant call forward destination information from the HLR.

### Step 12:

The EVMT then sends a connect message for connecting the call to the call forward destination of B. The call is thereby diverted to the call forward destination of B, such as the voice mail.

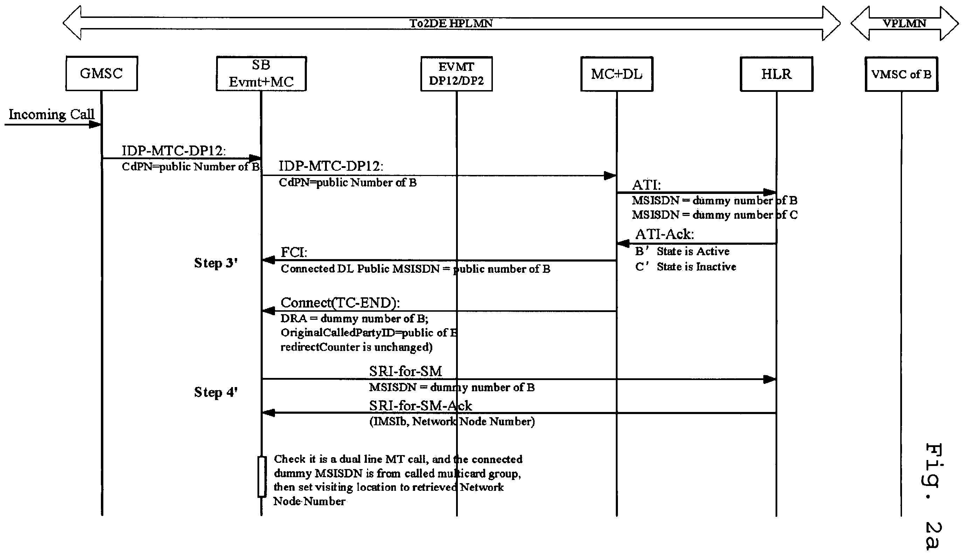

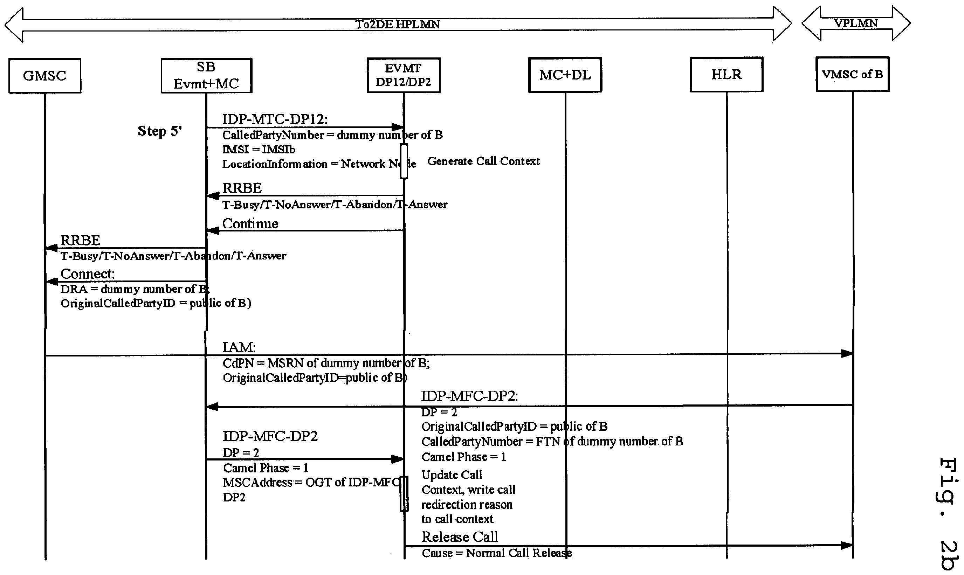

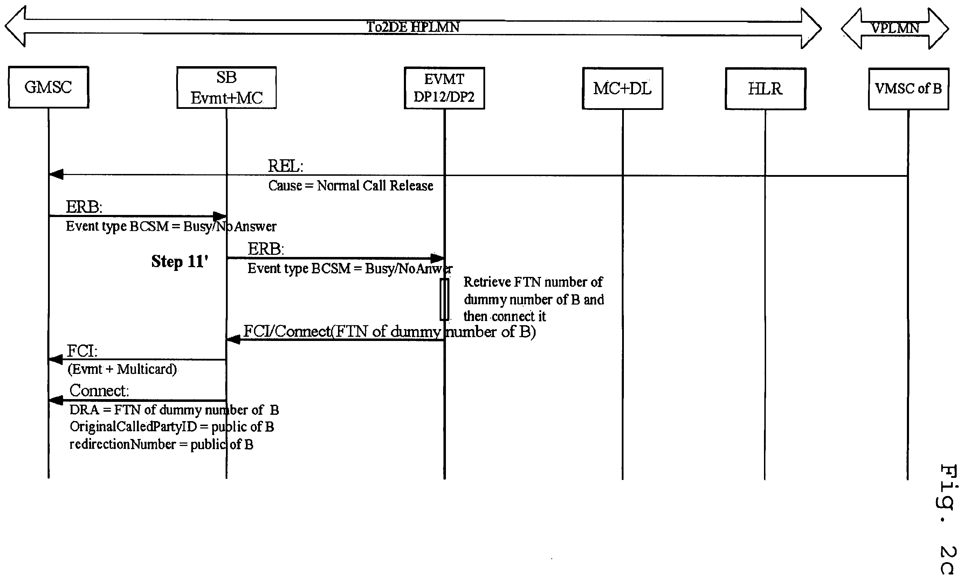

As already pointed out above, the EVMT service can also be used in the same way as described above if an active line that is roaming is called. Figure 2a-2c describes the process flow for this case, i. e. that the public number of line B is called and B is active and roaming. The process flow is the same as the one described for figure 1a-1c but for the following differences:

### Step 3':

In this case, because B is active, the dummy number of B is sent from the dual line service to the EVMT as connecting information. Further, because no redirection has been performed, the redirection counter remains unchanged.

### Step 4':

Accordingly, EVMT will retrieve the location information for the dummy number of B.

### Step 5':

Because in the present case, B is roaming, the location information is set to the real location of B, i. e. the retrieved network note number. This information is now used to generate call context.

### Step 11':

Because the call was not initially directed to line C, the call is connected to the FTN number of the dummy number of B.

Figure 2a-2c relates to the case that the line that is called is active and roaming. In the case that the line that is called is active and connected to the home network, however, the EVMT function does not have to be used. In particular, no call context has to be generated in step 5, and the connection to the VMSC does not have to be released, i.e. the call can be forwarded via the trombone to the VMSC to the call forward destination of the active line.

In a different embodiment, however, also a call to a line that is active and not roaming can be dealt with in the EVMT in the same way as calls to a line that is in active, i. e. by generating call context using a virtual location in step 5, and dealing with the call as shown in figures 1a-1c and 2a-2c.

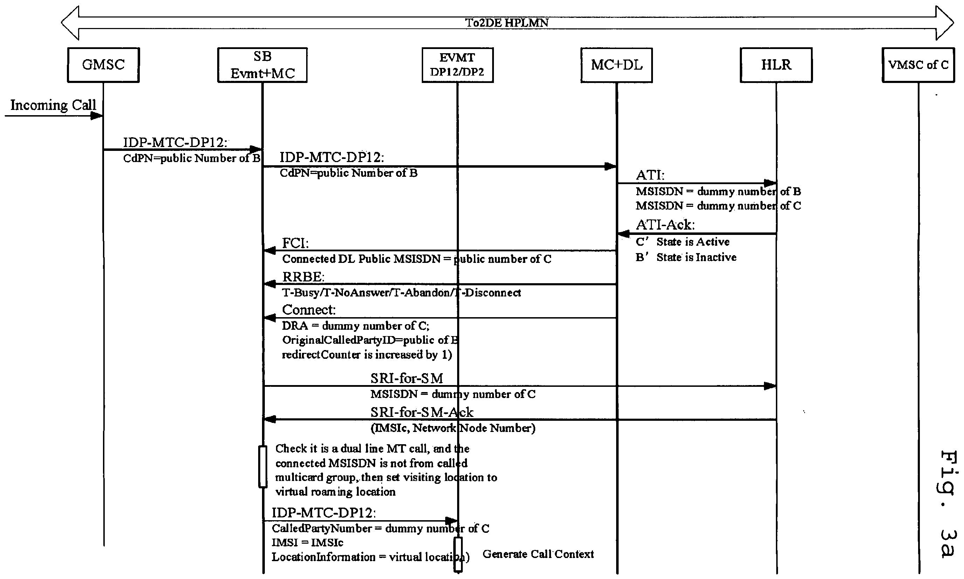

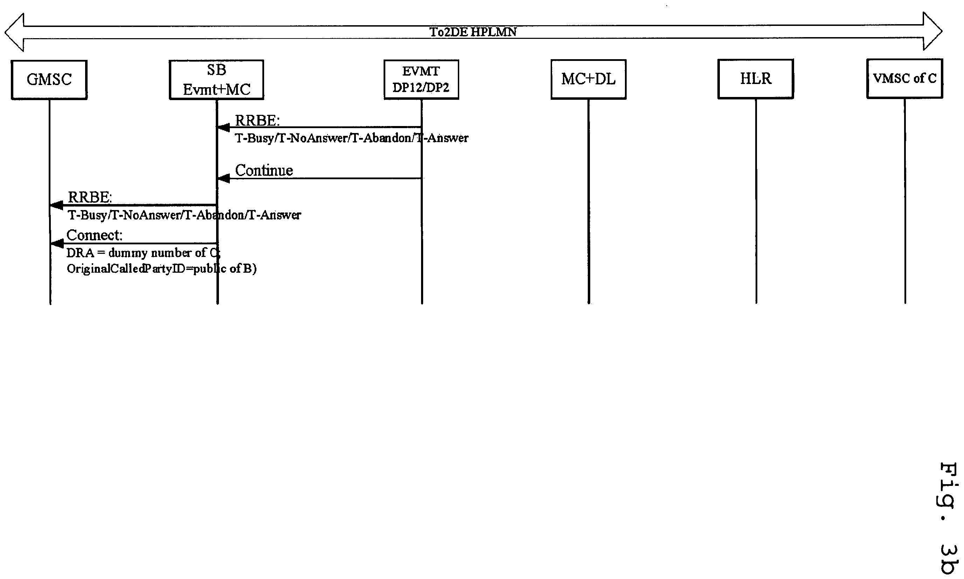

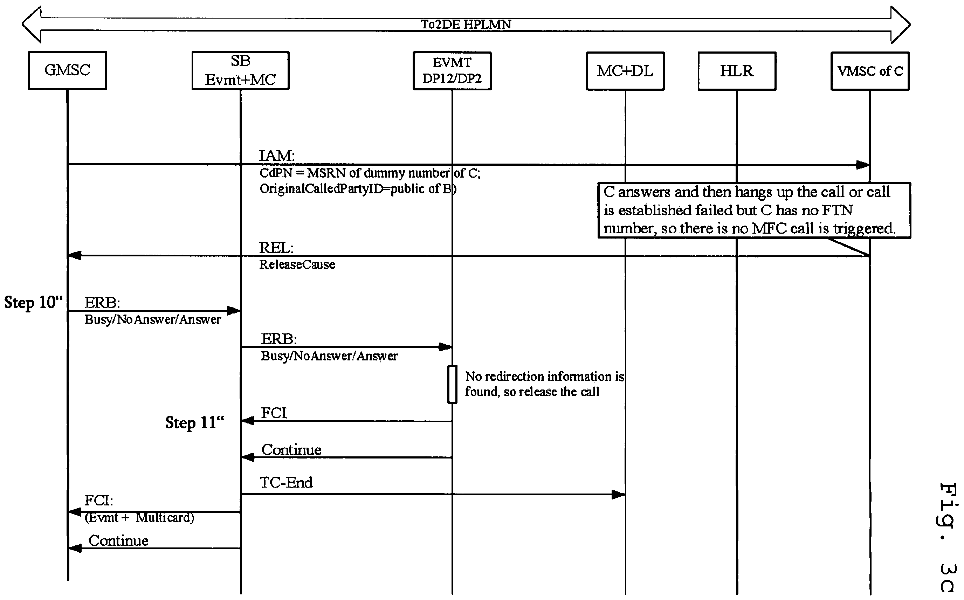

Figure 3a-3c also shows a process flow when initially the line B is called, but C is active. The process flow corresponds exactly to the process flow in figure 1a-1c for steps 1 to 9.

However, in the process flow shown in figure 3a-3c, C answers and then hangs up the call, or C has no call forward destination, such that no MFC call is triggered.

In this case, in step 10", C simply sends a release message to GMSC, and in step 11', EVMT releases the call because no redirection information is found.

The present invention therefore can use existing EVMT functionality also for multi-card/dual line uses in the home network or in a roaming network, in order to root a call to the correct mail box.

Therefore, the present invention provides a particularly simple and cost-effective solution for improving the mailbox functionality of a dual line/multi-card system.

## Claims

1. A communication system for providing mobile communication between a network and a mobile terminal,
the mobile terminal being equipped with one or more SIM-cards,
the one or more SIM-cards having at least a first and a second identifier,
the mobile terminal and/or the network having an activation function for choosing one out of the identifiers as an active identifier,
the network having a connecting function for establishing calls to the identifier that is active, wherein, said connection function is adapted to establish a call to the second identifier if a call to the first identifier is requested while the second identifier is active,
wherein a first call forward destination is assigned to the first identifier and a second, separate call forward destination is assigned to the second identifier, **characterized in that**,
the network includes a coordination function adapted to establish a communication with the call forward destination of the first identifier if a call to the first identifier is requested while the second identifier is active, such that a call to the second identifier is established, but the second identifier is not answering and/or busy and/or not reachable.

2. The communication system according to claim 1, wherein the network and/or the mobile terminal has a call forwarding function for forwarding calls to an identifier on a second line back to the network if the identifier is not answering and/or busy and/or not reachable, wherein, if a call to the first identifier is requested while the second identifier is active, such that a call to the second identifier is established, but the second identifier is not answering and/or busy and/or not reachable, the call will first be forwarded back from the second identifier to the network.

3. The communication system according to claim 2, wherein the coordination function of the network will correlate the call to the second identifier and the forwarded call from the second identifier, and establish a communication with the call forward destination of the first identifier.

4. The communication system according to claim 3, wherein the coordination function will release the call to the second identifier and directly establish a communication with the call forward destination of the first identifier.

5. The communication system according to any of the preceding claims, where the network has a roaming function for establishing communication to a mobile terminal connected to a different network, and a roaming trombone elimination function that will establish a direct communication to a call forward destination of the mobile terminal if the roaming mobile terminal is not answering and/or busy and/or not reachable, wherein the coordination function uses the roaming trombone elimination function for establishing communication with the call forward destination of the first identifier.

6. The communication system according to claim 5, wherein the coordination function uses the roaming trombone elimination function for correlating the call to the second identifier and the forwarded call from the second identifier, and for directly establishing a communication with the call forward destination of the first identifier.

7. The communication system according to any of the preceding claims, wherein the coordination function of the network will create call context if a call to the first identifier is requested while the second identifier is active and a call to the second identifier is established, wherein the coordination function preferably uses the call context to correlate the call to the second identifier and the forwarded call from the second identifier.

8. The communication system according to claim 7, wherein the call context contains a virtual roaming location that can be processed by a roaming trombone elimination function of the network if the mobile terminal is not roaming.

9. The communication system according to claim 7 or 8, wherein the call context contains a roaming location that can be processed by a roaming trombone elimination function of the network if the mobile terminal is roaming.

10. The communication system according to any of the preceding claims, wherein, if a communication with the first identifier is requested and the first identifier is active, a call to the first identifier is established, and, if the first identifier is not answering and/or busy and/or not reachable, a communication with the call forward destination of the first identifier is established without using the coordination function of the network if the mobile terminal is not roaming, and in particular without releasing the call to the first identifier and/or a communication with the call forward destination of the first identifier is established using the roaming trombone elimination function of the network if the mobile terminal is roaming, in particular by releasing the call to the first identifier.

11. The communication system according to any of the preceding claims, wherein the network has a multicard function for assigning the same identifier to a group of SIM-cards, wherein dummy identifiers are assigned to all the identifiers of all the SIM-Cards, wherein the network preferably has a database function containing information about the dummy identifiers and the identifiers and/or the SIMs they are assigned to.

12. The communication system according to claim 11, wherein the coordination function of the network will communicate with the database function when a call to an identifier is requested, in order to establish all dummy identifiers assigned to this identifier or assigned to identifiers assigned together with this identifier, wherein the network preferably comprises a function for establishing which of these dummy identifiers is active, and/or wherein the coordination function will only create call context if a call to a dummy identifier is established that does not belong to the multicard group of dummy identifiers assigned to the identifier for which a call was requested and/or wherein the mobile terminal is equipped with at least a second SIM-card, and/or the first and/or the second identifier is also assigned to a second SIM-card.

13. The communication system according to any of the preceding claims, wherein the first and second call forward destinations comprise a first and a second voicemail function for separately recording voicemail for the first and second identifier of the SIM-Card, respectively.

14. A method for providing mobile communication between a network and a mobile terminal, preferably using a system according to any of the claims 1 to 13, the mobile terminal being equipped with one or more SIM-cards,
the one or more SIM-cards having at least a first and a second identifier, wherein one out of the identifiers is chosen as an active identifier, by an activation function of the mobile terminal and/or the network, and wherein a first call forward destination is assigned to the first identifier and a second, separate call forward destination is assigned to the second identifier, wherein if a call to the first identifier is requested while the second identifier is active, a call to the second identifier is established by a connection function of the network, and **characterised in that** if the second identifier is not answering and/or busy and/or not reachable, a communication with the call forward destination of the first identifier is established by a coordination function of the network.

15. A computer program comprising code for implementing a method according to claim 14 in a network, the computer program preferably being contained on a computer-readable storage medium.

## Patentansprüche

1. Kommunikationssystem zum Vorsehen von Mobilfunkkommunikation zwischen einem Netz und einem mobilen Endgerät,
wobei das mobile Endgerät mit einer oder mehreren SIM-Karten ausgestattet ist,
wobei die eine oder die mehreren SIM-Karten mindestens einen ersten und einen zweiten Identifikator aufweist/aufweisen,
wobei das mobile Endgerät und/oder das Netz eine Aktivierungsfunktion zum Auswählen eines der Identifikatoren als aktiven Identifikator aufweist,
wobei das Netz eine Verbindungsfunktion zum Rufaufbau zu dem Identifikator, der aktiv ist, aufweist, wobei die Verbindungsfunktion ausgelegt ist, um einen Anruf zu dem zweiten Identifikator aufzubauen, wenn ein Anruf zu dem ersten Identifikator gefordert wird, während der zweite Identifikator aktiv ist,
wobei dem ersten Identifikator ein erstes Rufweiterleitungsziel zugeordnet ist und dem zweiten Identifikator ein zweites, separates Rufweiterleitungsziel zugeordnet ist,
**dadurch gekennzeichnet, dass**
das Netz eine Koordinationsfunktion umfasst, die ausgelegt ist, um mit dem Rufweiterleitungsziel des ersten Identifikators eine Verbindung herzustellen, wenn ein Anruf zu dem ersten Identifikator gefordert wird, während der zweite Identifikator aktiv ist, so dass ein Anruf zu dem zweiten Identifikator aufgebaut wird, aber der zweite Identifikator nicht antwortet und/oder besetzt und/oder nicht erreichbar ist.

2. Kommunikationssystem nach Anspruch 1, wobei das Netz und/oder das mobile Endgerät eine Rufweiterleitungsfunktion zum Weiterleiten von Anrufen zu einem Identifikator an einer zweiten Leitung zurück zum Netz aufweist, wenn der Identifikator nicht antwortet und/oder besetzt und/oder nicht erreichbar ist, wobei bei Anforderung eines Anrufs zu dem ersten Identifikator, während der zweite Identifikator aktiv ist, so dass ein Anruf zu dem zweiten Identifikator aufgebaut wird, aber der zweite Identifikator nicht antwortet und/oder besetzt und/oder nicht erreichbar ist, der Anruf zunächst von dem zweiten Identifikator zurück zu dem Netz weitergeleitet wird.

3. Kommunikationssystem nach Anspruch 2, wobei die Koordinationsfunktion des Netzes den Anruf zu dem zweiten Identifikator und den weitergeleiteten Anruf von dem zweiten Identifikator korreliert und eine Verbindung mit dem Rufweiterleitungsziel des ersten Identifikators aufbaut.

4. Kommunikationssystem nach Anspruch 3, wobei die Koordinationsfunktion den Anruf zu dem zweiten Identifikator beendet und direkt eine Verbindung zu dem Rufweiterleitungsziel des ersten Identifikators aufbaut.

5. Kommunikationssystem nach einem der vorhergehenden Ansprüche, wobei das Netz eine Roamingfunktion zum Aufbauen einer Verbindung mit einem mit einem anderen Netz verbundenen mobilen Endgerät und eine Roaming-Trombone-Eliminierungsfunktion aufweist, die zu einem Rufweiterleitungsziel des mobilen Endgeräts eine direkte Verbindung aufbaut, wenn das roamende mobile Endgerät nicht antwortet und/oder besetzt und/oder nicht erreichbar ist, wobei die Koordinationsfunktion die Roaming-Trombone-Eliminierungsfunktion zum Aufbau einer Verbindung mit dem Rufweiterleitungsziel des ersten Identifikators nutzt.

6. Kommunikationssystem nach Anspruch 5, wobei die Koordinationsfunktion die Roaming-Trombone-Eliminierungsfunktion zum Korrelieren des Anrufs zu dem zweiten Identifikator und des weitergeleiteten Anrufs von dem zweiten Identifikator und zum direkten Aufbauen einer Verbindung mit dem Rufweiterleitungsziel des ersten Identifikators nutzt.

7. Kommunikationssystem nach einem der vorhergehenden Ansprüche, wobei die Koordinationsfunktion des Netzes Anrufkontext erzeugt, wenn ein Anruf zu dem ersten Identifikator gefordert wird, während der zweite Identifikator aktiv ist, und ein Anruf zu dem zweiten Identifikator aufgebaut wird, wobei die Koordinationsfunktion den Anrufkontext bevorzugt nutzt, um den Anruf zu dem zweiten Identifikator und den weitergeleiteten Anruf von dem zweiten Identifikator zu korrelieren.

8. Kommunikationssystem nach Anspruch 7, wobei der Anrufkontext einen virtuellen Roaming-Standort enthält, der von einer Roaming-Trombone-Eliminierungsfunktion des Netzes verarbeitet werden kann, wenn das mobile Endgerät nicht roamt.

9. Kommunikationssystem nach Anspruch 7 oder 8, wobei der Anrufkontext einen Roaming-Standort enthält, der von einer Roaming-Trombone-Eliminierungsfunktion des Netzes verarbeitet werden kann, wenn das mobile Endgerät roamt.

10. Kommunikationssystem nach einem der vorhergehenden Ansprüche, wobei, wenn eine Verbindung mit dem ersten Identifikator gefordert wird und der erste Identifikator aktiv ist, ein Anruf zu dem ersten Identifikator aufgebaut wird und, wenn der erste Identifikator nicht antwortet und/oder besetzt und/oder nicht erreichbar ist, eine Verbindung mit dem Rufweiterleitungsziel des ersten Identifikators ohne Nutzen der Koordinationsfunktion des Netzes, wenn das mobile Endgerät nicht roamt, und insbesondere ohne Beenden des Anrufs zu dem ersten Identifikator aufgebaut wird und/oder eine Verbindung mit dem Rufweiterleitungsziel des ersten Identifikators unter Nutzen der Roaming-Trombone-Eliminierungsfunktion des Netzes, wenn das mobile Endgerät roamt, insbesondere durch Beenden des Anrufs zu dem ersten Identifikator, aufgebaut wird.

11. Kommunikationssystem nach einem der vorhergehenden Ansprüche, wobei das Netz eine Mehrkartenfunktion zum Zuweisen des gleichen Identifikators an eine Gruppe von SIM-Karten aufweist, wobei allen Identifikatoren aller SIM-Karten Dummy-Identifikatoren zugewiesen sind, wobei das Netz bevorzugt eine Datenbankfunktion aufweist, die Informationen über die Dummy-Identifikatoren und die Identifikatoren und/oder die SIMs, denen sie zugewiesen sind, enthält.

12. Kommunikationssystem nach Anspruch 11, wobei die Koordinationsfunktion des Netzes mit der Datenbankfunktion kommuniziert, wenn ein Anruf zu einem Identifikator gefordert wird, um alle Dummy-Identifikatoren, die diesem Identifikator zugewiesen sind oder Identikatoren zugewiesen sind, die zusammen mit diesem Identifikator zugewiesen sind, zu ermitteln, wobei das Netz bevorzugt eine Funktion zum Ermitteln, welcher dieser Dummy-Identifikatoren aktiv ist, umfasst und/oder wobei
die Koordinationsfunktion nur Anrufkontext erzeugt, wenn ein Anruf zu einem Dummy-Identifikator aufgebaut wird, der nicht zu der Mehrkartengruppe von Dummy-Identifikatoren gehört, die dem Identifikator zugewiesen sind, für den ein Anruf gefordert wurde, und/oder wobei das mobile Endgerät mit mindestens einer zweiten SIM-Karte ausgestattet ist und/oder der erste und/oder der zweite Indentifikator auch einer zweiten SIM-Karte zugewiesen ist.

13. Kommunikationssystem nach einem der vorhergehenden Ansprüche, wobei das erste und das zweite Rufweiterleitungsziel eine erste und eine zweite Anrufbeantworter-Funktion zum separaten Aufzeichnen von Sprachnachrichten für den ersten bzw. zweiten Identifikator der SIM-Karte umfassen.

14. Verfahren zum Vorsehen von Mobilfunkkommunikation zwischen einem Netz und einem mobilen Endgerät, welches bevorzugt ein System nach einem der Ansprüche 1 bis 13 nutzt,
wobei das mobile Endgerät mit einer oder mehreren SIM-Karten ausgestattet ist,
wobei die eine oder die mehreren SIM-Karten mindestens einen ersten und einen zweiten Identifikator aufweisen,
wobei durch eine Aktivierungsfunktion des mobilen Endgeräts und/oder des Netzes einer der Identifikatoren als aktiver Identifikator gewählt wird und
wobei dem ersten Identifikator ein erstes Rufweiterleitungsziel zugeordnet wird und dem zweiten Identifikator ein zweites, separates Rufweiterleitungsziel zugeordnet wird,
wobei, wenn ein Anruf zu dem ersten Identifikator gefordert wird, während der zweite Identifikator aktiv ist, ein Anruf zu dem zweiten Identifikator durch eine Verbindungsfunktion des Netzes aufgebaut wird, und
**dadurch gekennzeichnet, dass**,
wenn der zweite Identifikator nicht antwortet und/oder besetzt und/oder nicht erreichbar ist, durch eine Koordinationsfunktion des Netzes eine Verbindung mit dem Rufweiterleitungsziel des ersten Identifikators aufgebaut wird.

15. Computerprogramm, welches Code zum Implementieren eines Verfahrens nach Anspruch 14 in einem Netz umfasst, wobei das Computerprogramm bevorzugt auf einem von einem Computer lesbaren Speichermedium enthalten ist.

## Revendications

1. Système de communication destiné à fournir une communication mobile entre un réseau et un terminal mobile,
le terminal mobile étant équipé d'une ou plusieurs cartes SIM,
la ou les cartes SIM comportant au moins un premier et un second identifiant,
le terminal mobile et/ou le réseau comportant une fonction d'activation pour choisir l'un des identifiants comme identifiant actif,
le réseau comportant une fonction de connexion pour établir des appels vers l'identifiant qui est actif, ladite fonction de connexion étant adaptée pour établir un appel vers le second identifiant si un appel vers le premier identifiant est requis alors que le second identifiant est actif,
une première destination de renvoi d'appel étant attribuée au premier identifiant et une seconde destination de renvoi d'appel séparée étant attribuée au second identifiant,
**caractérisé en ce que**
le réseau comprend une fonction de coordination adaptée pour établir une communication avec la destination de renvoi d'appel du premier identifiant si un appel vers le premier identifiant est requis alors que le second identifiant est actif, de telle sorte qu'un appel vers le second identifiant est établi mais que le second identifiant ne répond pas et/ou est occupé et/ou n'est pas joignable.

2. Système de communication selon la revendication 1, dans lequel
le réseau et/ou le terminal mobile comporte une fonction de renvoi d'appel pour renvoyer au réseau des appels vers un identifiant sur une seconde ligne si l'identifiant ne répond pas et/ou est occupé et/ou n'est pas joignable,
l'appel étant d'abord renvoyé au réseau depuis le second identifiant si un appel vers le premier identifiant est requis alors que le second identifiant est actif, de telle sorte qu'un appel vers le second identifiant est établi, mais que le second identifiant ne répond pas et/ou est occupé et/ou n'est pas joignable.

3. Système de communication selon la revendication 2, dans lequel la fonction de coordination du réseau corrèle l'appel vers le second identifiant avec l'appel renvoyé depuis le second identifiant, et établit une communication avec la destination de renvoi d'appel du premier identifiant.

4. Système de communication selon la revendication 3, dans lequel la fonction de coordination libère l'appel vers le second identifiant et établit directement une communication avec la destination de renvoi d'appel du premier identifiant.

5. Système de communication selon l'une quelconque des revendications précédentes, dans lequel le réseau comporte une fonction d'itinérance pour établir une communication avec un terminal mobile connecté à un différent réseau, et une fonction d'élimination de l'effet trombone de l'itinérance qui établit une communication directe avec une destination de renvoi d'appel du terminal mobile si le terminal mobile en itinérance ne répond pas et/ou est occupé et/ou n'est pas joignable, la fonction de coordination utilisant la fonction d'élimination de l'effet trombone de l'itinérance pour établir une communication avec la destination de renvoi d'appel du premier identifiant.

6. Système de communication selon la revendication 5, dans lequel la fonction de coordination utilise la fonction d'élimination de l'effet trombone de l'itinérance pour corréler l'appel vers le second identifiant avec l'appel renvoyé depuis le second identifiant, et pour établir directement une communication avec la destination de renvoi d'appel du premier identifiant.

7. Système de communication selon l'une quelconque des revendications précédentes, dans lequel
la fonction de coordination du réseau crée un contexte d'appel si un appel vers le premier identifiant est requis alors que le second identifiant est actif et qu'un appel vers le second identifiant est établi, la fonction de coordination utilisant de préférence le contexte d'appel pour corréler l'appel vers le second identifiant avec l'appel renvoyé depuis le second identifiant.

8. Système de communication selon la revendication 7, dans lequel
le contexte d'appel contient une localisation d'itinérance virtuelle qui peut être traitée par une fonction d'élimination de l'effet trombone de l'itinérance du réseau si le terminal mobile n'est pas en itinérance.

9. Système de communication selon la revendication 7 ou 8, dans lequel
le contexte d'appel contient une localisation d'itinérance qui peut être traitée par une fonction d'élimination de l'effet trombone de l'itinérance du réseau si le terminal mobile est en itinérance.

10. Système de communication selon l'une quelconque des revendications précédentes, dans lequel
si une communication avec le premier identifiant est requise et que le premier identifiant est actif, un appel vers le premier identifiant est établi, et, si le premier identifiant ne répond pas et/ou est occupé et/ou n'est pas joignable, une communication avec la destination de renvoi d'appel du premier identifiant est établie sans utiliser la fonction de coordination du réseau si le terminal mobile n'est pas en itinérance, et en particulier sans libérer l'appel vers le premier identifiant et/ou une communication avec la destination de renvoi d'appel du premier identifiant est établie en utilisant la fonction d'élimination de l'effet trombone de l'itinérance du réseau si le terminal mobile est en itinérance, en particulier en libérant l'appel vers le premier identifiant.

11. Système de communication selon l'une quelconque des revendications précédentes, dans lequel
le réseau comporte une fonction multicarte pour attribuer le même identifiant à un groupe de cartes SIM,
des identifiants fictifs étant attribués à tous les identifiants de toutes les cartes SIM,
le réseau comportant de préférence une fonction de base de données contenant des informations sur les identifiants fictifs et les identifiants et/ou les SIM auxquels ils sont attribués.

12. Système de communication selon la revendication 11, dans lequel
la fonction de coordination du réseau communique avec la fonction de base de données quand un appel vers un identifiant est requis, afin d'établir tous les identifiants fictifs attribués à cet identifiant ou attribués à des identifiants attribués ensemble à cet identifiant,
le réseau comprenant de préférence une fonction destinée à établir lequel de ces identifiants fictifs est actif et/ou
la fonction de coordination ne créant un contexte d'appel que si un appel vers un identifiant fictif qui ne fait pas partie du groupe multicarte d'identifiants fictifs attribués à l'identifiant pour lequel un appel a été requis, est établi et/ou le terminal mobile étant équipé d'au moins une seconde carte SIM, et/ou le premier et/ou le second identifiant étant également attribué à une seconde carte SIM.

13. Système de communication selon l'une quelconque des revendications précédentes, dans lequel
la première et la seconde destination de renvoi d'appel comprennent une première et une seconde fonction de message vocal pour enregistrer séparément un message vocal respectivement pour le premier et le second identifiant de la carte SIM.

14. Procédé destiné à fournir une communication mobile entre un réseau et un terminal mobile, de préférence au moyen d'un système selon l'une quelconque des revendications 1 à 13, le terminal mobile étant équipé d'une ou plusieurs cartes SIM,
la ou les cartes SIM comportant au moins un premier et un second identifiant,
l'un des identifiants étant choisi comme identifiant actif par une fonction d'activation du terminal mobile et/ou du réseau, et
une première destination de renvoi d'appel étant attribuée au premier identifiant et une seconde destination de renvoi d'appel séparée étant attribuée au second identifiant,
un appel vers le second identifiant étant établi par une fonction de connexion du réseau si un appel vers le premier identifiant est requis alors que le second identifiant est actif, et
**caractérisé en ce que**
si le second identifiant ne répond pas et/ou est occupé et/ou n'est pas joignable, une communication avec la destination de renvoi d'appel du premier identifiant est établie par une fonction de coordination du réseau.

15. Programme informatique comprenant du code pour mettre en oeuvre un procédé selon la revendication 14 dans un réseau, le programme informatique étant de préférence inclus sur un support de stockage lisible par ordinateur.
